# EUROPÄISCHE PATENTSCHRIFT

(11) **EP 3 074 679 B1**
(45) Veröffentlichungstag und Bekanntmachung des Hinweises auf die Patenterteilung: **25.10.2017**
(21) Anmeldenummer: 14802398.9
(22) Anmeldetag: 19.11.2014
(51) Int. Cl.: F16K 31/06

(54) **MAGNETISCH BETÄTIGBARE VENTILVORRICHTUNG**
MAGNETICALLY ACTUATABLE VALVE DEVICE
SYSTÈME DE SOUPAPE À COMMANDE MAGNÉTIQUE

(30) Priorität: 27.11.2013 DE 102013224286
(43) Veröffentlichungstag der Anmeldung: 05.10.2016
(73) Patentinhaber: Neuhaus, Dietmar, 40591 Düsseldorf (DE)
(72) Erfinder: Neuhaus, Dietmar, 40591 Düsseldorf (DE)
(74) Vertreter: dompatent von Kreisler Selting Werner - Partnerschaft von Patent- und Rechtsanwälten mbB
(86) Internationale Anmeldenummer: PCT/EP2014/074996
(87) Internationale Veröffentlichungsnummer: WO 2015/078741

(56) Entgegenhaltungen:
- WO-A1-2010/086241
- DE-B3- 10 359 852
- DE-B3-102005 035 878
- DE-C1- 19 922 414
- US-A- 3 828 818

## Beschreibung

Die vorliegende Erfindung betrifft eine magnetisch betätigbare Ventilvorrichtung nach dem Oberbegriff des Anspruchs 1.

In der DE 199 22 414 C1 (DLR) ist ein Magnetventil beschrieben, bei dem der Ventilkörper allein durch die Druckdifferenz zwischen Ventileingang und Ventilausgang in den Ventilsitz gepresst wird. Das Ventil öffnet, wenn ein seitlich auf den Ventilkörper wirkendes Magnetfeld den Ventilkörper von der Ventilöffnung bewegt. Hierzu ist der Ventilkörper als magnetisierbare Kugel ausgebildet. Die magnetisierbare Wand des Ventilgehäuses enthält in der Höhe des Ventilkörpers eine das Magnetfeld deformierende Unstetigkeitsstelle, an der das Magnetfeld eine parallel zum Ventilsitz gerichtete Kraft auf den Ventilkörper ausübt. Aufgrund der Unstetigkeitsstelle gelangt der magnetische Fluss von der Wand auf den Ventilkörper und von diesem zurück in die Wand. Der magnetische Fluss durch den Ventilkörper ist ein Maß für die Kraft, mit der der Ventilkörper von der Ventilöffnung fortbewegt wird. Das Magnetventil schließt, wenn nach dem Abschalten des Magnetfeldes der Ventilkörper allein durch die Strömung auf die Ventilöffnung zurückgetragen wird. Bei dem vorbekannten Ventil bildet die magnetisierbare Wand mit dem Ventilkörper einen Magnetkreis.

In DE 10 2005 035 878 B3 (DLR) ist eine Ventilvorrichtung nach dem Oberbegriff des Anspruchs 1 beschrieben. Auch bei diesem Magnetventil wird das magnetisierbare Verschlusselement allein durch die Druckdifferenz zwischen Ventileingang und Ventilausgang in den Ventilsitz gepresst. Die magnetisierbare Wand enthält mindestens ein Zwischenstück aus einem nicht magnetisierbaren Material. Der Ventilsitz besteht aus einem magnetisierbaren Material und bildet zusammen mit dem Verschlusselement und der magnetisierbaren Wand den Magnetkreis. Durch den magnetisierbaren Ventilsitz kann der magnetische Fluss mit einem geringen magnetischen Widerstand vom Verschlusselement über den Ventilsitz in die magnetisierbare Wand gelangen.

Der vorliegenden Erfindung liegt die Aufgabe zugrunde, ein magnetisch betätigbares Ventil zu schaffen, das im Stande ist, eine große Kraft auf den Ventilkörper auszuüben.

Die erfindungsgemäße magnetisch betätigbare Ventilvorrichtung ist definiert durch die Merkmale von Anspruch 1.

Die erfindungsgemäße magnetisch betätigbare Ventilvorrichtung weist einen Innenraum auf, der durch mindestens eine aus magnetisierbarem Material bestehenden Wand begrenzt wird, wobei die magnetisierbare Wand einen Ventilsitz bildet. Eine Magnetanordnung bildet einen Magnetkreis mit einem in der magnetisierbaren Wand verlaufenden Magnetfluss. In dem Innenraum ist mindestens ein magnetisierbarer Ventilkörper bewegbar angeordnet. In der magnetisierbaren Wand ist mindestens ein sich um den Zwischenraum erstreckendes Zwischenelement mit gegenüber der magnetisierbaren Wand verringerter magnetischer Leitfähigkeit angeordnet, wobei das Zwischenelement eine erste Aussparung aufweist, in die sich ein sich in axialer Richtung der Ventilvorrichtung erstreckender Vorsprung der magnetisierbaren Wand erstreckt. Mit anderen Worten: Der durch das Zwischenelement gebildete Bereich aus Material mit verringerter magnetischer Leitfähigkeit weist an zwei sich gegenüberliegenden Seiten in axialer Richtung eine unterschiedliche Erstreckung auf.

Die erfindungsgemäße Ventilvorrichtung ist dadurch gekennzeichnet, dass zwei Führungselemente aus magnetisierbarem Material an gegenüberliegenden Seiten des Ventilkörpers in dem Innenraum und versetzt zu der ersten Aussparung bzw. dem Vorsprung angeordnet sind, wobei die Führungselemente den Ventilkörper führen und wobei die Führungselemente zusammen mit der magnetisierbaren Wand den Magnetkreis bilden und der Magnetfluss durch die Wand, den Ventilkörper und die Führungselemente verläuft.

Die Kraft auf den Ventilkörper ist abhängig vom magnetischen Fluss, der durch den Ventilkörper fließt. Ein großer magnetischer Fluss bedeutet auch eine große magnetische Kraft auf den Ventilkörper. Der magnetische Fluss tritt in den Ventilkörper ein und wieder aus. Bei gegebener magnetischer Spannung ist ein geringer magnetischer Widerstand im Magnetkreis vorteilhaft, um einen großen magnetischen Fluss zu erhalten. Der magnetische Widerstand im Magnetkreis ist abhängig von den Spaltbreiten zwischen dem Ventilkörper und der magnetisierbaren Wand bzw. den Führungselementen. Durch das Vorsehen der Führungselemente wird erreicht, dass in dem Magnetkreis nur relativ schmale Spalten zu überwinden sind, so dass in dem Magnetkreis der magnetische Widerstand gering ist. Dadurch wird eine große Kraft auf den Ventilkörper ausgeübt. Da die Führungselemente den Ventilkörper führen, ist gewährleistet, dass der Spalt zwischen dem Ventilkörper und den Führungselementen während der Öffnungsbewegung des Ventilkörpers relativ schmal bleibt, so dass während der gesamten Öffnungsbewegung zwischen dem Ventilkörper und den Führungselementen ein geringer magnetischer Widerstand besteht. Die Spaltbreite zwischen einem Führungselement und dem Ventilkörper kann beispielsweise 5:100mm betragen.

Die Führungselemente bewirken auch eine durch den Magnetfluss hervorgerufene Kraft auf den Ventilkörper. Da die Führungselemente jedoch an den gegenüberliegenden Seiten des Ventilkörpers angeordnet sind, wirken die von den Führungselementen auf den Ventilkörper ausgeübten Kräfte in entgegengesetzte Richtung, so dass diese vollständig bzw. nahezu vollständig kompensiert werden. Der Spalt zwischen den Führungselementen und dem Ventilkörper kann beispielsweise als Gleitpassung ausgebildet sein, wobei aufgrund der von den Führungselementen auf den Ventilkörper ausgeübten Kräfte der Ventilkörper mittig zwischen den Führungselementen gehalten wird, wodurch die Reibkräfte zwischen den Führungselementen und dem Ventilkörper gering gehalten werden können.

Das Zwischenelement bewirkt, dass die magnetischen Feldlinien an dieser Stelle aus der magnetisierbaren Wand austreten, wenn sich ein Körper mit höherem magnetischem Leitwert in der Nähe der so gebildeten Unstetigkeitsstelle befindet. Ein derartiger Körper wird durch den Ventilkörper gebildet. Durch den Vorsprung der magnetisierbaren Wand, der in die erste Aussparung des Zwischenelementes hineinragt, wird eine Asymmetrie im Magnetfeld gebildet, da zwischen diesem Vorsprung und dem Ventilkörper ein geringerer Abstand vorliegt als an der gegenüberliegenden Seite zwischen dem oberhalb des Zwischenelements befindlichen Bereichs der magnetisierbaren Wand und dem Ventilkörper. Dadurch wird eine verstärkte Anziehungskraft auf den Ventilkörper in Richtung des Vorsprungs erzeugt. Der Magnetfluss durch die Wand, den Ventilkörper und die Führungselemente wird dadurch erreicht, dass bei dem dem Innenraum zugewandten Teil der magnetisierbaren Wand keine direkte Verbindung aus magnetisierbarem Material zwischen dem Vorsprung der magnetisierbaren Wand und den Führungselementen besteht, sondern zwischen diesen eine Trennung mittels des Zwischenelementes besteht.

Die Führungselemente können beispielsweise um 90° gegenüber der ersten Aussparung bzw. dem Vorsprung versetzt angeordnet sein.

Vorzugsweise ist vorgesehen, dass die Führungselemente den Innenraum verjüngen. Auf diese Weise ist eine Führung des Ventilkörpers in vorteilhafter Weise möglich, wobei ein möglichst geringer Spalt zwischen Führungselementen und dem Ventilkörper geschaffen werden kann. Beispielsweise bei dem Vorsehen eines kugelförmigen Ventilkörpers und eines runden Innenraumes lässt sich die Führung des Ventilkörpers über die den Innenraum verjüngenden Führungselemente in besonders vorteilhafter Weise bereitstellen, wobei darüber hinaus die erfindungsgemäße Ventilvorrichtung einen konstruktiv einfachen Aufbau aufweisen kann.

In einem Ausführungsbeispiel der Erfindung ist vorgesehen, dass die Führungselemente durch magnetisierbare Einsätze in die magnetisierbare Wand gebildet sind, wobei sich die Einsätze in zweite Aussparungen des Zwischenelementes erstrecken. Alternativ kann vorgesehen sein, dass die Führungselemente durch sich in axiale Richtung parallel zu dem Zwischenelement erstreckende Zungen gebildet werden.

Auf diese Weise können die Führungselemente auf konstruktiv einfache Art und Weise bereitgestellt werden.

Der Vorsprung und die Führungselemente erstrecken sich axial in entgegengesetzter Richtung von der magnetisierbaren Wand aus. Dadurch kann in vorteilhafter Weise erreicht werden, dass der Bereich der magnetisierbaren Wand, von dem aus sich der Vorsprung erstreckt, und der Teil der magnetisierbaren Wand, von dem aus sich die Führungselemente erstrecken, auf dem dem Innenraum zugewandten Bereich der magnetisierbaren Wand keinen direkten Kontakt haben, sondern von dem Zwischenelement getrennt sind. Der Vorsprung kann sich beispielsweise von dem einen Ventileingang umgebenden Teil der magnetisierbaren Wand in Richtung eines Ventilausgangs erstrecken. Die Führungselemente können sich beispielsweise von dem den Ventilausgang umgebenden Bereich der magnetisierbaren Wand in Richtung des Ventileingangs erstrecken.

In einem besonders bevorzugten Ausführungsbeispiel der Erfindung ist vorgesehen, dass sich die Führungselemente vom Ventilsitz aus in axialer Richtung in den Innenraum erstrecken. Die Führungselemente können beispielsweise einstückig mit dem Ventilsitz ausgebildet sein, wodurch die Führungselemente auf konstruktiv einfache Art und Weise geschaffen werden können.

In einem Ausführungsbeispiel der erfindungsgemäßen Ventilvorrichtung ist vorgesehen, dass der Ventilsitz eine gegenüber der Ventilmittelachse versetzte Ventilöffnung aufweist. Die Ventilöffnung kann beispielsweise in Richtung der ersten Aussparung hin versetzt sein. Dadurch kann ein besonders kleiner Abstand zwischen dem Vorsprung der magnetisierbaren Wand und dem Ventilkörper geschaffen werden, wodurch ein geringer magnetischer Widerstand und somit eine hohe Magnetkraft auf den Ventilkörper erzeugt werden kann. Dabei kann vorgesehen sein, dass gegenüber der ersten Aussparung eine weitere erste Aussparung angeordnet ist, in die sich die magnetisierbare Wand mit einem weiteren Vorsprung erstreckt. Die beiden ersten Aussparungen und die beiden Vorsprünge sind dabei symmetrisch ausgebildet, wobei durch die versetzt gegenüber der Ventilmittelachse angeordnete Ventilöffnung eine Asymmetrie erzeugt wird, wodurch in eine Richtung eine erhöhte Anziehungskraft auf den Ventilkörper erzeugt werden kann.

In einem Ausführungsbeispiel der Erfindung kann vorgesehen sein, dass sich in Richtung zu der ersten Aussparung hin der Abstand zwischen den Führungselementen verringert. Die dem Ventilkörper zugewandte Oberfläche der Führungselemente ist somit gekrümmt, so dass bei der Öffnungsbewegung des Ventilkörpers der Spalt zwischen den Führungselementen und dem Ventilkörper verringert wird. Die gewölbte Oberfläche der Führungselemente ist darüber hinaus in vorteilhafter Weise an einen beispielsweise kugelförmig ausgebildeten Ventilkörper angepasst, so dass während der Öffnungsbewegung des Ventilkörpers eine vergrößerte Fläche mit geringem Abstand zu dem Ventilkörper entsteht. Mit anderen Worten: Die Führungselemente umfassen den Ventilkörper während der Öffnungsbewegung immer stärker. Dadurch sinkt der magnetische Widerstand zwischen den Führungselementen und dem Ventilkörper.

Die Erfindung sieht in vorteilhafter Weise vor, dass der Ventilkörper kugelförmig oder tonnenförmig ausgebildet ist. Unter Tonnenform wird eine Kugelform mit gegenüberliegend entfernten Kugelsegmenten, wodurch gegenüberliegende Flachstellen entstehen, verstanden. Ein derartig geformter Ventilkörper kann in vorteilhafter Weise zumindest in eine Richtung rollen. Darüber hinaus lässt sich mit einem derartigen Ventilkörper in vorteilhafter Weise eine Ventilöffnung dichtend abdecken. Darüber hinaus wird durch die Flachstellen erreicht, dass diese direkt gegenüberliegend den Führungselementen angeordnet sein können, wodurch zwischen dem Ventilkörper und den Führungselementen eine sehr große wirksame Fläche mit geringem Abstand zueinander gebildet wird, wodurch ein besonders geringer magnetischer Widerstand entsteht.

In einem Ausführungsbeispiel der Erfindung ist vorgesehen, dass die Ventilvorrichtung drei Ventilkörper, drei Ventilöffnungen in dem Ventilsitz, drei erste Aussparungen in dem Zwischenelement, in die sich die magnetisierbare Wand jeweils mit einem Vorsprung erstreckt, und drei Führungselemente aufweist, wobei die drei Führungselemente versetzt zu den drei ersten Aussparungen angeordnet sind und wobei jeweils zwei der Führungselemente einen der Ventilkörper seitlich umgeben und führen. Bei einer derartigen Ventilvorrichtung ist jeweils ein Ventilkörper einer Ventilöffnung zugeordnet. Jeweils zwei Führungselemente bilden eine Führung für einen Ventilkörper, so dass ein Führungselement jeweils mit zwei Ventilkörpern zusammenwirkt. Der Magnetfluss gelangt von den Führungselementen jeweils über die Ventilkörper zu den Vorsprüngen der magnetisierbaren Wand. Ferner ist jedem Ventilkörper einer der Vorsprünge der magnetisierbaren Wand zugeordnet. Beim Öffnen der Ventilvorrichtung wird jeder der Ventilkörper in Richtung des ihm zugeordneten Vorsprungs der magnetisierbaren Wand gezogen, so dass die Ventilöffnung freigegeben wird. Bei diesem Ausführungsbeispiel der Ventilvorrichtung sind die drei Ventilöffnungen außermittig angeordnet.

Das Zwischenelement kann aus einem amagnetischen Material bestehen, so dass im normalen Gebrauch das Zwischenelement nicht magnetisierbar ist. Vorzugsweise ist der Innenraum rund ausgebildet, wobei Führungselemente diesen in dem einen Bereich verjüngen, so dass in diesem Bereich eine Unrundheit entsteht. Eine Ventilöffnung in dem Ventilsitz kann einen Dichteinsatz aufweisen, der aus magnetischem oder amagnetischem Material besteht.

Im Folgenden wird unter Bezugnahme auf die nachfolgenden Figuren die Erfindung näher erläutert.

Es zeigen:
- Figuren 1a-1c: verschiedene Schnittdarstellungen eines ersten Ausführungsbeispiels einer erfindungsgemäßen Ventilvorrichtung,
- Figuren 2a, 2b: eine Schnittdarstellung eines zweiten Ausführungsbeispiels einer erfindungsgemäßen Ventilvorrichtung,
- Figuren 3a, 3b: Schnittdarstellungen eines dritten Ausführungsbeispiels einer erfindungsgemäßen Ventilvorrichtung,
- Figur 4: eine Schnittdarstellung eines vierten Ausführungsbeispiels einer erfindungsgemäßen Ventilvorrichtung,
- Figur 5: eine Schnittdarstellung eines fünften Ausführungsbeispiels einer erfindungsgemäßen Ventilvorrichtung mit tonnenförmigem Ventilkörper,
- Figuren 6a, 6b: schematische Schnittdarstellungen eines sechsten Ausführungsbeispiels einer erfindungsgemäßen Ventilvorrichtung mit drei Ventilkörpern sowie
- Figuren 7 und 8: zwei weitere Ausführungsbeispiele einer erfindungsgemäßen Ventilvorrichtung mit drei Ventilkörpern.

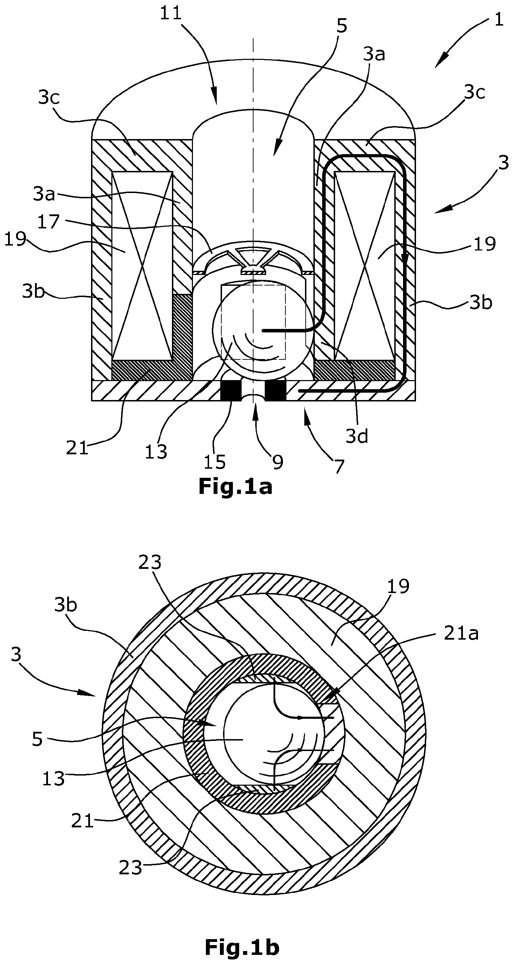

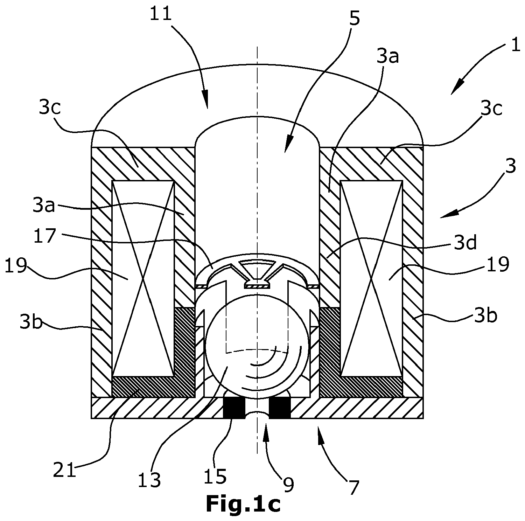

In den Figuren 1a-1c sind verschiedene Schnittdarstellungen einer erfindungsgemäßen, magnetisch betätigbaren Ventilvorrichtung 1 schematisch im Schnitt dargestellt. Figur 1a zeigt dabei einen Längsschnitt durch die Ventilvorrichtung 1 im geöffneten Zustand, wobei die Magnetflusslinien dargestellt sind. Figur 1b zeigt einen Schnitt quer durch die Ventilvorrichtung in dem in Figur 1a dargestellten Zustand und Figur 1c eine schematische Darstellung eines Längsschnittes, wobei der Längsschnitt gemäß Figur 1c um 90° gegenüber dem in Figur 1a dargestellten Schnitt gedreht ist. In der Figur 1c ist das Ventil in geschlossener Stellung gezeigt.

Die Ventilvorrichtung 1 weist eine magnetisierbare Wand 3 auf, die einen Innenraum 5 begrenzt. Die magnetisierbare Wand 3 bildet ferner einen Ventilsitz 7, der eine Ventilöffnung 9 bildet. Die Ventilöffnung 9 formt den Ventilausgang, wohingegen an der gegenüberliegenden Seite ein Ventileingang 11 in den Innenraum 5 gebildet ist. Im Inneren des Innenraums 5 ist ein Ventilkörper 13 angeordnet, der in dem in den Figuren 1a-1c dargestellten Ausführungsbeispiel als Kugel ausgebildet ist. Über den Ventilkörper 13 lässt sich die Ventilöffnung 9 durch eine Druckdifferenz zwischen dem Ventileingang 11 und dem Ventilausgang 9 verschließen. Dazu kann der Ventilsitz 7 einen Dichteinsatz 15 aufweisen, der die Ventilöffnung 9 umgibt. Der Dichteinsatz 15 kann aus einem magnetischen oder amagnetischen Material bestehen. Der Ventilkörper 13 ist in dem Innenraum 5 parallel zu dem Ventilsitz 7 bewegbar sowie auch senkrecht zu dem Ventilsitz 7. Die Bewegung senkrecht zu dem Ventilsitz 7 wird durch eine Fangvorrichtung 17 begrenzt, die in dem Innenraum 5 angeordnet ist.

Die magnetisierbare Wand 3 ist ringförmig um den Innenraum 5 ausgebildet und weist einen ringförmigen Hohlraum für eine Magnetanordnung 19 auf. Die Magnetanordnung 19 umgibt ringförmig einen Innenschenkel 3a der Wand 3, wobei die Magnetanordnung 19 ihrerseits von einem Außenschenkel 3b der Wand 3 umschlossen ist. Der Innenschenkel 3a und der Außenschenkel 3b sind am oberen Ende durch eine ringförmige Platte 3c verbunden.

Die Außenschenkel 3b stehen in direktem Kontakt mit dem Ventilsitz 7, wobei der Ventilsitz 7 eine Platte bildet, die den Innenraum 5 nach unten begrenzt. Die Wand 3 mit dem Innenschenkel 3a, dem Außenschenkel 3b, der ringförmigen Platte 3c sowie dem Ventilsitz 7 besteht aus magnetisierbarem Material, beispielsweise aus Eisen oder magnetisierbarem Edelstahl.

Ein Zwischenelement 21 ist zwischen dem Innenschenkel 3a und dem Ventilsitz 7 angeordnet, so dass kein direkter Kontakt zwischen dem Innenschenkel 3a und dem Ventilsitz 7 besteht. Ferner ist das Zwischenelement 21 auch zwischen der Magnetanordnung 19 und dem Ventilsitz 7 angeordnet.

Das Zwischenelement besteht aus einem Material von geringer magnetischer Leitfähigkeit. Die Leitfähigkeit kann auch Null betragen. Das Zwischenelement 21 weist eine erste Aussparung 21a auf, die am besten aus Figur 1b ersichtlich ist. Der Innenschenkel 3a der magnetisierbaren Wand 3 erstreckt sich in axialer Richtung mit einem Vorsprung 3d in die erste Aussparung 21a, wobei der Vorsprung 3d durch das Zwischenstück 21 weiterhin von dem Ventilsitz 7 getrennt ist. Wie aus Figur 1a ersichtlich ist, erstreckt sich somit das Zwischenelement 21 an zwei sich gegenüberliegenden Seiten in axialer Richtung unterschiedlich weit.

Der Vorsprung 3d erstreckt sich in axialer Richtung ausgehend von dem Innenschenkel 3a in Richtung des Ventilsitzes 7 und somit in einer Richtung von dem Ventileingang 11 in Richtung des Ventilausgangs.

Von dem Ventilsitz 7 aus erstrecken sich zwei Führungselemente 23 in den Innenraum 5. Die Führungselemente sind an gegenüberliegenden Seiten des Ventilkörpers 13 angeordnet und führen diesen. Ferner sind die Führungselemente 23 um 90° zu der ersten Aussparung 21a und somit zu dem Vorsprung 3d versetzt angeordnet.

Durch den Vorsprung 3d hat der Innenschenkel 3a in diesem Bereich verglichen mit der gegenüberliegenden Seite eine größere Länge, wodurch bei Erzeugung eines Magnetfeldes eine durch das Zwischenstück hervorgerufene Inhomogenität des Magnetfeldes hervorgerufen wird. Es entsteht somit eine Asymmetrie, wodurch auf den Ventilkörper 13 eine Kraft ausgeübt wird, die in Richtung des Vorsprungs 3d wirkt, so dass der Ventilkörper von der Ventilöffnung in Richtung des Vorsprungs 3d gezogen wird. Die entsprechenden Magnetflusslinien sind in den Figuren 1a und 1b angedeutet. Der Magnetfluss erstreckt sich von dem Ventilsitz 7 der magnetisierbaren Wand 3 aus über die Führungselemente 23 in den Ventilkörper 13 und von dem Ventilkörper 13 über den Vorsprung 3d zurück in die Wand 3. Der Magnetkreis hat bei der erfindungsgemäßen Ventilvorrichtung nur relativ geringe Spalten zu überwinden, so dass ein geringer magnetischer Widerstand besteht. Dadurch kann eine sehr hohe Kraft auf den Ventilkörper 13 ausgeübt werden. Die Führungselemente 23 bilden mit dem Ventilkörper 13 eine Gleitpassung, bei der nur ein sehr geringer Spalt entsteht. Dadurch, dass die Führungselemente 23 einander gegenüberliegend um den Ventilkörper angeordnet sind, werden von den Führungselementen 23 auf den Ventilkörper 13 ausgeübte magnetische Kräfte kompensiert. Ferner wird durch diese Kräfte der Ventilkörper 13 mittig zwischen den Führungselementen 23 erhalten, so dass nur eine Bewegung in Richtung des Vorsprungs 3d erfolgt.

Wie am besten aus Figur 1c ersichtlich ist, in der das Ventil im geschlossenen Zustand dargestellt ist, werden die Führungselemente 23 durch zwei Zungen gebildet, die sich in axialer Richtung parallel zu dem Zwischenelement 21 erstrecken.

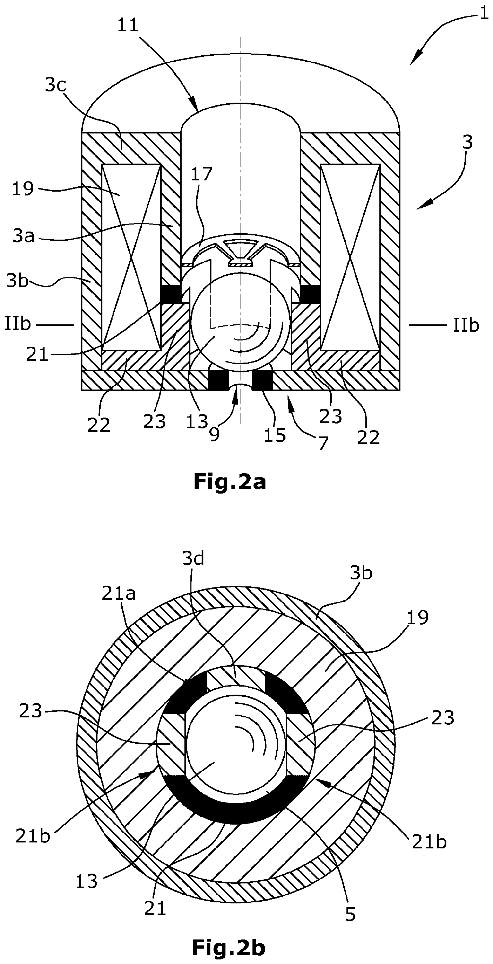

In den Figuren 2a und 2b ist ein zweites Ausführungsbeispiel einer erfindungsgemäßen Ventilvorrichtung 1 schematisch in zwei Schnittdarstellungen dargestellt. In Figur 2a ist das Ventil in einem Längsschnitt schematisch dargestellt. In Figur 2b ist eine Schnittdarstellung quer durch die Ventilvorrichtung 1 gezeigt.

Das Ausführungsbeispiel der Figuren 2a und 2b unterscheidet sich in der in den Figuren 1a-1c dargestellten Ventilvorrichtung darin, dass die Führungselemente 23 nicht als parallel zu dem Zwischenelement 21 angeordnete Zungen ausgebildet sind, sondern durch magnetisierbare Einsätze 22. Das Zwischenelement 21 weist dabei zwei zweite Aussparungen 21b auf, in die sich die Einsätze 22 erstrecken. Die Einsätze 22 bilden somit Teil der Wand 3, wobei sie stärker als die Innenschenkel 3a ausgebildet sind und somit eine Verjüngung des Innenraums 5 bewirken. Die Einsätze 22 liegen auf dem Ventilsitz 7 auf. Durch die erste Aussparung 21a und die beiden zweiten Aussparungen 21b besitzt das Zwischenelement einen zickzackförmigen Verlauf, da sich die Aussparung 21a aus Richtung des Ventileingangs 11 aus in das Zwischenelement 21 erstreckt, wohingegen die beiden Aussparungen 21b aus Richtung des Ventilsitzes 7 in axialer Richtung in das Zwischenelement 11 eingeformt sind. Dadurch wird gewährleistet, dass die Einsätze 22 und der Vorsprung 3d axial in entgegengesetzte Richtung von der magnetisierbaren Wand aus verlaufen und durch das Zwischenelement 21 voneinander getrennt sind. Dadurch kann der erfindungsgemäße Magnetfluss durch die Wand 3, den Ventilkörper 13 und die Führungselemente 23 hervorgerufen werden.

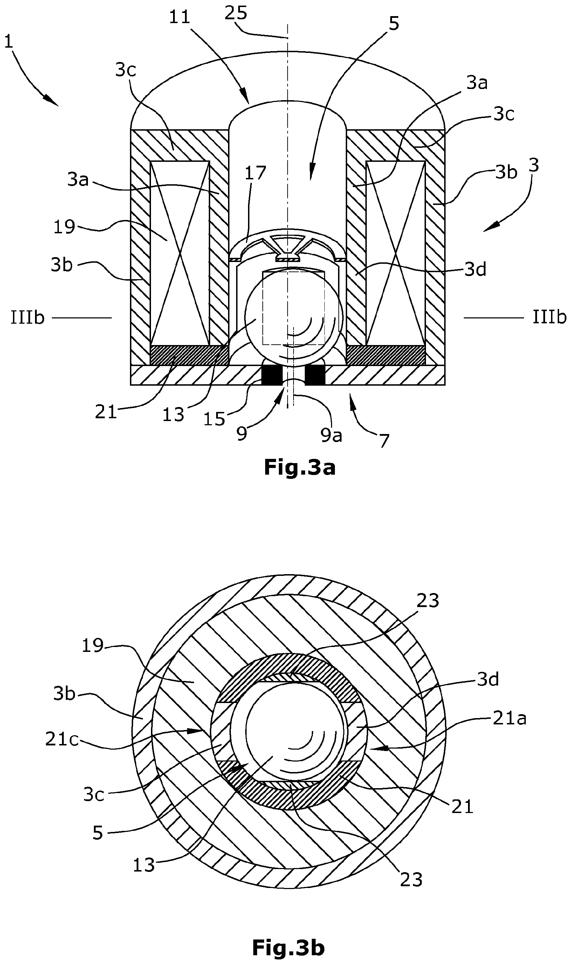

In den Figuren 3a und 3b ist ein drittes Ausführungsbeispiel einer erfindungsgemäßen Ventilvorrichtung 1 schematisch im Schnitt dargestellt. In Figur 3a ist ein Längsschnitt dargestellt, in Figur 3b eine Schnittdarstellung quer durch die Ventilvorrichtung 1. Das Ausführungsbeispiel gemäß Figuren 3a und 3b unterscheidet sich von dem in Figur 1 dargestellten Ausführungsbeispiel darin, dass die Ventilöffnung 9 versetzt zu der Ventilachse 25 angeordnet ist. Die Ventilöffnung 9 ist somit außermittig in Richtung des Vorsprungs 3d verschoben. Dadurch ist zwischen dem Vorsprung 3d und dem Ventilkörper 13 ein schmaler Spalt, wodurch der magnetische Widerstand sehr gering gehalten werden kann und auf den Ventilkörper 13 während der Öffnungsbewegung eine hohe Kraft ausgeübt werden kann.

Bei dem in den Figuren 3a und 3b dargestellten Ausführungsbeispiel kann ferner eine weitere erste Aussparung 21c vorgesehen sein, die der ersten Aussparung 21a gegenüberliegt. In die weitere erste Aussparung 21c erstreckt sich der Innenschenkel 3a der magnetisierbaren Wand 3 mit einem weiteren Vorsprung 3e. Durch die außermittige Anordnung des Ventilkörpers wird eine Asymmetrie geschaffen, wobei eine höhere Magnetkraft von dem Vorsprung 3d auf den Ventilkörper 13 ausgeübt wird und dieser zum Öffnen des Ventils in Richtung des Vorsprungs 3d gezogen wird.

Die Führungselemente 23 sind in gleicher Weise, wie bei dem in den Figuren 1a-1c dargestellten Ausführungsbeispiel, ausgebildet.

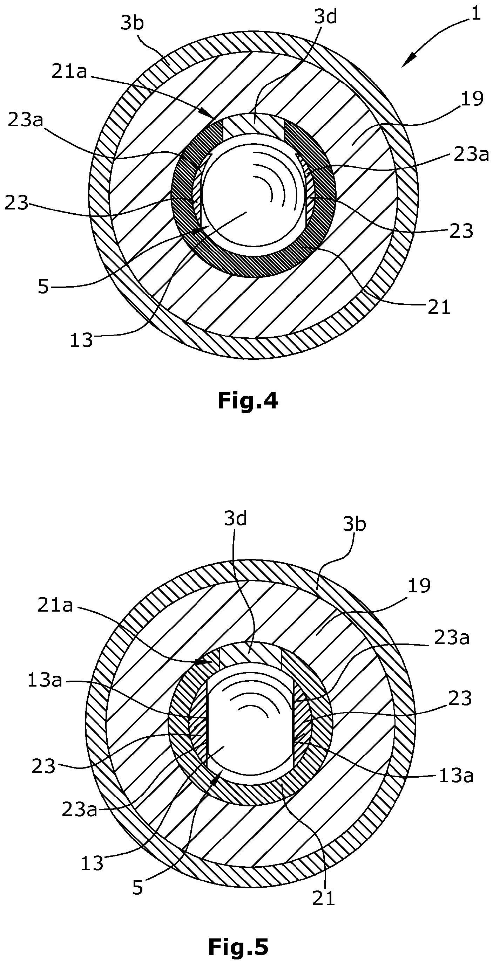

In Figur 4 ist eine schematische Schnittdarstellung eines vierten Ausführungsbeispiels einer erfindungsgemäßen Ventilvorrichtung 1 schematisch dargestellt. Die Darstellung gemäß Figur 4 entspricht im Wesentlichen der Darstellung der Figur 1b. Das Ausführungsbeispiel der Figur 4 unterscheidet sich von dem Ausführungsbeispiel der Figuren 1a-1c dahingehend, dass sich die Führungselemente 23 in Richtung zu der ersten Aussparung 21a und somit zu dem Vorsprung 3d hin gewölbt geformt sind, wobei sich der Abstand zwischen den beiden Führungselementen 23 verringert. Dadurch ist die dem Ventilkörper 13 zugewandte Oberfläche der Führungselemente 23 an den kugelförmigen Ventilkörper 13 angepasst, so dass eine große Fläche der Führungselemente 23 mit dem Ventilkörper 13 zusammenwirken kann und somit ein sehr geringer magnetischer Widerstand entsteht.

In Figur 5 ist ein fünftes Ausführungsbeispiel einer erfindungsgemäßen Ventilvorrichtung schematisch im Schnitt dargestellt. Die Darstellung der Figur 5 entspricht im Wesentlichen der Darstellung der Figur 1b. Das Ausführungsbeispiel der Figur 5 unterscheidet sich von dem Ausführungsbeispiel der Figuren 1a-1c dahingehend, dass der Ventilkörper 13 anstelle einer Kugelform eine Tonnenform aufweist. Ferner sind die Führungselemente 23, die sich ebenfalls von dem in Figur 5 nicht dargestellten Ventilsitz in den Innenraum 5 erstrecken, dicker ausgestaltet, so dass eine vorteilhafte Führung des Ventilkörpers 13 erfolgen kann.

Aufgrund der Tonnenform weist der Ventilkörper zwei gegenüberliegende Flachstellen 13a auf, die parallel zu der Oberfläche der Führungselemente 23 verlaufen. Dadurch entsteht eine kurze wirksame Fläche zwischen dem Ventilkörper 13 und den Führungselementen 23, so dass ein sehr geringer magnetischer Widerstand entsteht. Durch die Tonnenform ist der Ventilkörper 13 in vorteilhafter Weise in der Lage, die Ventilöffnung abzudichten. Ferner kann durch die Tonnenform der Ventilkörper 13 bei Betätigung des Ventils auf einfache Art und Weise in Richtung des Vorsprungs 3d rollen.

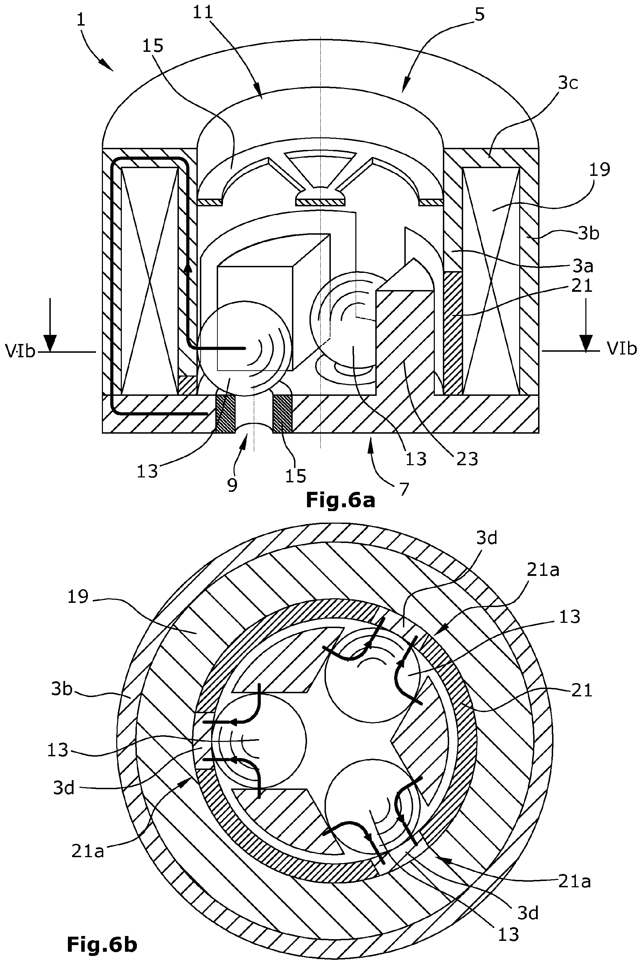

In den Figuren 6a und 6b ist ein sechstes Ausführungsbeispiel einer erfindungsgemäßen Ventilvorrichtung 1 schematisch dargestellt. In Figur 6a ist ein Längsschnitt durch die Ventilvorrichtung 1 gezeigt. In Figur 6b ist eine Schnittdarstellung quer durch die Ventilvorrichtung 1 dargestellt. Die in den Figuren 6a und 6b dargestellte Ventilvorrichtung 1 weist einen Ventilsitz 7 mit drei Ventilöffnungen 9 auf. Jede der Ventilöffnungen 9 ist von einem Dichteinsatz 15 umschlossen. Ferner sind in dem Innenraum 5 drei kugelförmige Ventilkörper 13 angeordnet. Jeder Ventilkörper 13 ist einer Ventilöffnung 9 zugeordnet. Die Ventilkörper 13 sind untereinander durch insgesamt drei Führungselemente 23 getrennt, die sich von dem Ventilsitz 7 aus in axialer Richtung in den Innenraum 5 erstrecken. Die den Innenraum 5 umgebende Wand 3 ist an dem Innenschenkel 3a über ein Zwischenelement 21 unterbrochen, wobei drei erste Aussparungen 21a gebildet sind, in die sich Vorsprünge 3d des Innenschenkels 3a der Wand 3 erstrecken. Die Führungselemente 23 sind versetzt zu den Vorsprüngen 3d angeordnet. Jeder Vorsprung 3d ist ferner einem der Ventilkörper 13 zugeordnet. In den Figuren 6a und 6b ist das Ventil in der Öffnungsstellung dargestellt, wobei die Magnetflusslinien schematisch gezeigt sind. Jedes Führungselement 23 wirkt mit zwei Ventilkörpern 13 zusammen, wobei die Ventilkörper 13 und die Führungselemente 23 in Umfangsrichtung des Innenraums 5 alternierend angeordnet sind.

Bei Betätigung der Ventilvorrichtung 1 verläuft der Magnetfluss von der magnetisierbaren Wand 3 durch die Führungselemente 23 in die Ventilkörper 13 und von dort in die Vorsprünge 3d zurück in die Wand 3. Dabei entsteht zwischen jedem Vorsprung 3d und den jeweils zugeordneten Ventilkörpern 13 eine Magnetkraft, die den jeweiligen Ventilkörper 13 in Richtung des Vorsprungs 3d zieht und somit die Ventilöffnungen 9 freigegeben werden.

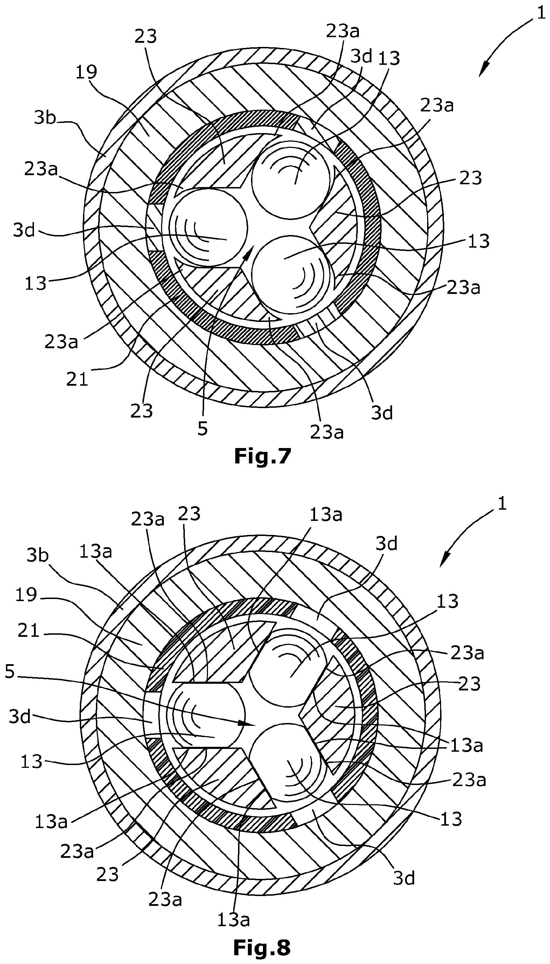

In Figur 7 ist eine Abwandlung des in den Figuren 6a und 6b dargestellten Ausführungsbeispiels einer erfindungsgemäßen Ventilvorrichtung 1 dargestellt. Die Darstellung der Figur 7 entspricht im Wesentlichen der Darstellung der Figur 6b. Das Ausführungsbeispiel gemäß der Figur 7 unterscheidet sich von der in den Figuren 6a und 6b dargestellten Ventilvorrichtung 1 dahingehend, dass die den Ventilkörpern zugewandten Flächen 23a gewölbt sind und somit an die Form der Ventilkörper 13 angepasst sind. Die Funktion der in Figur 7 dargestellten Ventilvorrichtung 1 entspricht im Wesentlichen der Funktion des in Figur 4 dargestellten Ausführungsbeispiels.

In Figur 8 ist ein weiteres Ausführungsbeispiel einer erfindungsgemäßen Ventilvorrichtung 1 schematisch im Schnitt dargestellt. Das Ausführungsbeispiel der Figur 8 ist eine weitere Abwandlung der in den Figur 6a und 6b dargestellten Ventilvorrichtung 1. Die Darstellung der Figur 8 entspricht im Wesentlichen der Darstellung der Figur 6b. Das Ausführungsbeispiel gemäß Figur 8 unterscheidet sich von der Ventilvorrichtung 1 gemäß dem Ausführungsbeispiel der Figuren 6a und 6b dahingehend, dass die Ventilkörper 13 nicht kugelförmig, sondern tonnenförmig ausgebildet sind. Die Kugeln weisen somit jeweils gegenüberliegende Flachstellen 13a auf, die parallel zu den Oberflächen 23a der Führungselemente 23 verlaufen. Dadurch wirken die Führungselemente 23 über die Oberflächen 23a großflächig mit den Flachstellen 13a der Ventilkörper 13 zusammen, wobei zwischen den Führungselementen 23 und den Ventilkörpern 13 ein sehr geringer magnetischer Widerstand vorliegt. Die Funktionsweise des Ausführungsbeispiels gemäß Figur 8 entspricht im Wesentlichen der Funktionsweise des Ausführungsbeispiels gemäß Figur 5.

Die Tonnenform der Ventilkörper 13 ermöglicht in vorteilhafter Weise eine Abdichtung der Ventilöffnungen. Ferner können die Ventilkörper 13 über runde Oberflächen in vorteilhafter Weise bei Betätigung der Ventilvorrichtung 1 in Richtung der Vorsprünge 3d rollen, wobei über die Abflachung 13a und die Oberflächen 23a der Führungselemente 23 eine vorteilhafte Führung der Ventilkörper 13 erfolgt.

Bei den erfindungsgemäßen Ventilvorrichtungen 1 werden die Ventilkörper 13 allein durch die Druckdifferenz zwischen Ventileingang 11 und dem durch die Ventilöffnung 9 gebildeten Ventilausgang auf den Dichteinsatz 15 gepresst. Die Ventilvorrichtung wird geöffnet, wenn über die Magnetanordnung 19 das Magnetfeld aktiviert wird.

## Patentansprüche

1. Magnetisch betätigbare Ventilvorrichtung (1), mit einem durch mindestens eine aus magnetisierbarem Material bestehende Wand (3) begrenzten Innenraum (5), die einen Ventilsitz (7) bildet, und mit einer Magnetanordnung (9), die einen Magnetkreis mit einem in der magnetisierbaren Wand (3) verlaufenden Magnetfluss erzeugt, und mit mindestens einem in dem Innenraum (5) bewegbaren, magnetisierbaren Ventilkörper (13), wobei in der magnetisierbaren Wand (3) mindestens ein sich um den Innenraum erstreckendes Zwischenelement mit gegenüber der magnetisierbaren Wand (3) verringerter magnetischer Leitfähigkeit angeordnet ist, wobei das Zwischenelement eine erste Aussparung (21a) aufweist, in die sich ein Vorsprung (3d) der magnetisierbaren Wand (3) erstreckt,
**dadurch gekennzeichnet, dass**
zwei Führungselemente (23) aus magnetisierbarem Material an gegenüberliegenden Seiten des Ventilkörpers (13) in dem Innenraum (5) und versetzt zu der ersten Aussparung (3d) angeordnet sind, wobei die Führungselemente (23) den Ventilkörper (13) führen und wobei die Führungselemente (23) zusammen mit der Wand (3) den Magnetkreis bilden, wobei der Magnetfluss durch die Wand (3), den Ventilkörper (13) und die Führungselemente (23) verläuft.

2. Ventilvorrichtung nach Anspruch 1, **dadurch gekennzeichnet, dass** die Führungselemente (23) den Innenraum (5) verjüngen.

3. Ventilvorrichtung nach Anspruch 1 oder 2, **dadurch gekennzeichnet, dass** Führungselemente (23) durch magnetisierbare Einsätze (22) in die magnetisierbare Wand (3) gebildet werden, wobei sich die Einsätze (22) in zweite Aussparungen (21b) des Zwischenelementes (21) erstrecken.

4. Ventilvorrichtung nach Anspruch 1 oder 2, **dadurch gekennzeichnet, dass** Führungselemente (23) durch sich in axialer Richtung parallel zu dem Zwischenelement (21) ersteckenden Zungen gebildet werden.

5. Ventilvorrichtung nach einem der Ansprüche 1 bis 4, **dadurch gekennzeichnet, dass** sich der Vorsprung (3d) und die Führungselemente (23) axial in entgegengesetzte Richtung von der magnetisierbaren Wand (3) aus erstrecken.

6. Ventilvorrichtung nach einem der Ansprüche 1 bis 5, **dadurch gekennzeichnet, dass** sich die Führungselemente (23) vom Ventilsitz (7) aus in axialer Richtung in den Innenraum (5) erstrecken.

7. Ventilvorrichtung nach einem der Ansprüche 1 bis 6, **dadurch gekennzeichnet, dass** der Ventilsitz (7) eine gegenüber der Ventilmittelachse (25) versetzte Ventilöffnung (9) aufweist.

8. Ventilvorrichtung nach einem der Ansprüche 1 bis 6, **dadurch gekennzeichnet, dass** der mindestens eine Ventilkörper (13) kugelförmig oder tonnenförmig ist.

9. Ventilvorrichtung nach einem der Ansprüche 1 bis 8, **gekennzeichnet durch** drei Ventilkörper (13), drei Ventilöffnungen (9) in dem Ventilsitz (7), drei erste Aussparungen (21a) in dem Zwischenelement (21), in die sich die Wand (3) jeweils mit einem Vorsprung (3d) erstreckt, und drei Führungselementen (23), die versetzt zu den drei ersten Aussparungen (21a) angeordnet sind, wobei jeweils zwei Führungselemente (23) einen der Ventilkörper (13) seitlich umgeben und führen.

## Claims

1. Magnetically actuatable valve device (1), comprising an inner chamber (5) delimited by at least one wall (3) consisting of magnetizable material, which wall forms a valve seat (7), and a magnet arrangement (9) which generates a magnetic circuit with a magnetic flux running in the magnetizable wall (3), and at least one magnetizable valve body (13) moveable in the inner chamber (5), wherein at least one intermediate element is arranged in the magnetizable wall (3) extending around the inner chamber and having a reduced magnetic conductivity in comparison with the magnetizable wall (3), wherein the intermediate element comprises a first recess (21a) into which a projection (3d) of the magnetizable wall (3) extends,
**characterized in that**
two guide elements (23) made of magnetizable material are arranged in the inner chamber (5) on opposite sides of the valve body (13) and offset from the first recess (3d), wherein the guide elements (23) guide the valve body (13) and wherein the guide elements (23) together with the wall (3) form the magnetic circuit, wherein the magnetic flux runs through the wall (3), the valve body (13), and guide elements (23).

2. Valve device of claim 1, **characterized in that** the guide elements (23) cause a taper in the inner chamber (5).

3. Valve device of claim 1 or 2, **characterized in that** the guide elements (23) are formed by magnetizable inserts (22) into the magnetizable wall (3), the inserts (22) extending into second recesses (21b) o the intermediate element (21).

4. Valve device of claim 1 or 2, **characterized in that** the guide elements (23) are formed by tongues extending axially in parallel with the intermediate element (21).

5. Valve device of one of claims 1 to 4, **characterized in that** the projection (3d) and the guide elements (23) extend axially in opposite directions from the magnetizable wall (3).

6. Valve device of one of claims 1 to 5, **characterized in that** the guide elements (23) extend axially from the valve seat (7) into the inner chamber (5).

7. Valve device of one of claims 1 to 6, **characterized in that** the valve seat (7) has a valve opening (9) offset from the valve centre axis (25).

8. Valve device of one of claims 1 to 6, **characterized in that** the at least one valve body (13) is ball-shaped or barrel-shaped.

9. Valve device of one of claims 1 to 8, **characterized by** three valve bodies (13), three valve openings (9) in the valve seat (7), three first recesses (21a) in the intermediate element (21) into which the wall (3) extends by a respective projection (3d), and three guide elements (23) arranged offset from the three first recesses (21a), two guide elements (23) laterally surrounding and guiding one of the valve bodies (13), respectively.

## Revendications

1. Système de soupape (1) à commande magnétique, avec un espace intérieur (5) qui est limité par au moins une paroi (3) en matériau magnétisable et qui forme un siège de soupape (7), et avec un ensemble magnétique (9) qui produit un circuit magnétique avec un flux magnétique s'écoulant dans la paroi (3) magnétisable, et avec au moins un corps de soupape (13) magnétisable mobile dans l'espace intérieur (5), au moins un élément intermédiaire qui s'étend autour de l'espace intérieur et qui a une conductivité magnétique réduite par rapport à la paroi (3) magnétisable étant disposé dans la paroi (3) magnétisable, l'élément intermédiaire présentant un premier évidement (21a) dans lequel s'étend une partie saillante (3d) de la paroi (3) magnétisable,
**caractérisé en ce que**
deux éléments de guidage (23) en matériau magnétisable sont disposés sur des côtés opposés du corps de soupape (13) dans l'espace intérieur (5) et de façon décalée par rapport au premier évidement (3d), les éléments de guidage (23) guidant le corps de soupape (13), et les éléments de guidage (23) formant conjointement avec la paroi (3) le circuit magnétique, le flux magnétique s'écoulant à travers la paroi (3), le corps de soupape (13) et les éléments de guidage (23).

2. Système de soupape selon la revendication 1,
**caractérisé en ce que** les éléments de guidage (23) rétrécissent l'espace intérieur (5).

3. Système de soupape selon la revendication 1 ou 2,
**caractérisé en ce que** des éléments de guidage (23) sont formés par des inserts (22) magnétisables dans la paroi (3) magnétisable, les inserts (22) s'étendant dans des deuxièmes évidements (21b) de l'élément intermédiaire (21).

4. Système de soupape selon la revendication 1 ou 2,
**caractérisé en ce que** des éléments de guidage (23) sont formés par des languettes s'étendant en direction axiale parallèlement à l'élément intermédiaire (21).

5. Système de soupape selon l'une des revendications 1 à 4, **caractérisé en ce que** la partie saillante (3d) et les éléments de guidage (23) s'étendent axialement en direction opposée à partir de la paroi (3) magnétisable.

6. Système de soupape selon l'une des revendications 1 à 5, **caractérisé en ce que** les éléments de guidage (23) s'étendent dans l'espace intérieur (5) en direction axiale à partir du siège de soupape (7).

7. Système de soupape selon l'une des revendications 1 à 6, **caractérisé en ce que** le siège de soupape (7) présente une ouverture de soupape (9) décalée par rapport à l'axe central de soupape (25).

8. Système de soupape selon l'une des revendications 1 à 6, **caractérisé en ce que** l'au moins un corps de soupape (13) est en forme de sphère ou de tonneau.

9. Système de soupape selon l'une des revendications 1 à 8, **caractérisé par** trois corps de soupape (13), trois ouvertures de soupape (9) dans le siège de soupape (7), trois premiers évidements (21a) dans l'élément intermédiaire (21) dans lesquels la paroi (3) s'étend respectivement avec une partie saillante (3d), et trois éléments de guidage (23) qui sont disposés de façon décalée par rapport aux trois premiers évidements (21a), respectivement deux éléments de guidage (23) entourant latéralement et guidant un des corps de soupape (13).
